# EUROPÄISCHE PATENTSCHRIFT

(11) **EP 1 604 777 B1**
(45) Veröffentlichungstag und Bekanntmachung des Hinweises auf die Patenterteilung: **13.09.2006**
(21) Anmeldenummer: 04013590.7
(22) Anmeldetag: 09.06.2004
(51) Int. Cl.: B23Q 11/00, B23Q 5/26

(54) **Vorrichtung zum Handhaben eines Bohrwerkzeugs oder Bohrwerkzeuggeräts**
Device for handling a drill or drill apparatus
Dispositif de manipulation de forage ou de dispositif de forage

(43) Veröffentlichungstag der Anmeldung: 14.12.2005
(73) Patentinhaber: Metabowerke GmbH, 72622 Nürtingen (DE)
(72) Erfinder: Schöne, Dirk, 72636 Frickenhausen-Linsenhofen (DE); Liersch, Ralph, Dipl.-Ing. (FH), 72555 Metzingen (DE); Lorek, Patricia, 72636 Frickenhausen (DE); Gantke, Rainhard, Dipl.-Ing., 72663 Grossbettlingen (DE)
(74) Vertreter: Dreiss, Fuhlendorf, Steimle & Becker

(56) Entgegenhaltungen:
- EP-A- 0 456 598
- DD-A- 278 079
- DE-A- 2 546 531
- DE-A- 3 543 655
- GB-A- 2 262 159
- US-A- 4 205 728

## Beschreibung

Die Erfindung betrifft eine Vorrichtung zum Handhaben eines Bohrwerkzeugs oder Bohrwerkzeuggeräts, insbesondere einer Bohrmaschine oder eines Bohrhammers, mit einer Montageeinrichtung für das Bohrwerkzeug oder Bohrwerkzeuggerät, mit einer Ansaugeinrichtung zum lösbaren Fixieren der Vorrichtung an einer ebenen Fläche und mit einer Vorschubeinrichtung für das Bohrwerkzeug oder Bohrwerkzeuggerät zur Unterstützung des Vorschubs bei der Ausführung des Bohrvorgangs, und mit einer Unterdruckquelle oder einem Anschluss für eine Unterdruckquelle und mit einer Absaugeinrichtung für Bohrstaub, wobei der Anschluss mit der Ansaugeinrichtung zum Ansaugen gegen die ebene Fläche und mit der Absaugeinrichtung zum Absaugen von Bohrstaub und mit der Vorschubeinrichtung zur Unterstützung des Vorschubs kommuniziert.

Eine derartige Vorrichtung ist aus DD 278 079 A1 bekannt und in der nicht vorveröffentlichten deutschen Patentanmeldung DE 103 19 597.1 der Anmelderin beschrieben.

Eine Einspanneinrichtung, häufig auch als Bohrständer bezeichnet, ist beispielsweise in Form des Metabo-Bohrständers DS 45, Seite 43 des 2001/2002-Katalogs der Anmelderin, bekannt. Der Bohrständer weist eine Basisplatte auf, die über einen vakuumbildenden Mechanismus gegen eine Tischplatte oder gegen eine glatte Wand ansaugbar ist. Hierfür ist keine separate externe Unterdruckquelle erforderlich. Der zwangsgeführte Vorschub einer eingespannten Bohrmaschine entlang einer Zahnstange erfolgt manuell. Am Hals der Bohrmaschine ist ein separat erhältliches Absaugrohr befestigbar, welches mit einem Staubsauger verbindbar ist.

Die DE 35 43 655 C2 zeigt einen Bohrständer mit einem komplizierten druckluftgesteuerten Vorschubmechanismus. Eine Ansaugvorrichtung für den Bohrständer zum Festlegen an einer Wand ist aber nicht vorgesehen. Hülsenförmige Absaugeinrichtungen zum Festlegen am Hals einer Bohrmaschine sind aus DE 295 12 804 A1 und aus DE 23 53 791 A1 bekannt.

Ausgehend von der aus DD 278 079 A1 bekannten Vorrichtung, bei der die Bohrmaschine zumindest mit ihrem Bohrfutter quasi innerhalb der Vorschubeinrichtung untergebracht ist, liegt der vorliegenden Erfindung die Aufgabe zugrunde, die Handhabungsvorrichtung im Hinblick auf die Montierbarkeit des Bohrwerkzeugs oder Bohrwerkzeuggeräts zu verbessern.

Diese Aufgabe wird bei einer Vorrichtung der genannten Art erfindungsgemäß dadurch gelöst, dass eine Vorschubachse der Vorschubeinrichtung und eine Längsachse des Bohrwerkzeugs oder Bohrwerkzeuggeräts parallel jedoch in einem Abstand zueinander angeordnet sind, sodass das Bohrwerkzeug oder Bohrwerkzeuggerät außerhalb des unterdruckbeaufschlagbaren Teils der Vorschubeinrichtung angeordnet ist.

Während bei der bekannten Vorrichtung nach DD 278 079 A1 die Vorschubachse der Vorschubeinrichtung mit der Längsachse des Bohrwerkzeugs oder Bohrwerkzeuggeräts fluchtet, indem sich das Bohrwerkzeuggerät durch die Vorschubeinrichtung hindurcherstreckt, wird mit der vorliegenden Erfindung vorgeschlagen, die Vorschubeinrichtung und das Bohrwerkzeuggerät quer zur Vorschubrichtung nebeneinander anzuordnen, was eine Reihe von Vorteilen mit sich bringt. Zum einen kann die Montageeinrichtung für das Bohrwerkzeug oder Bohrwerkzeuggerät weniger komplex ausgebildet werden, etwa in Form eines an sich bekannten Klemmkragens oder in Form einer sonstigen formschlüssig und/oder klemmschlüssig wirkenden Befestigungseinrichtung. Da sich das Bohrwerkzeug bzw. Bohrwerkzeuggerät außerhalb und neben der Vorschubeinrichtung befindet, also nicht durch die Vorschubeinrichtung hindurcherstreckt, kann die unterdruckbeaufschlagte und unterdruckangetriebene Vorschubeinrichtung ebenfalls vereinfacht ausgebildet werden, da keine Dichtproblematik zu dem Bohrwerkzeuggerät besteht. Bei der bekannten Vorrichtung musste der Faltenbalg dichtend mit dem Bohrwerkzeuggerät verbunden werden. Dies erschwerte wiederum den Zugang zum Bohrfutter. Hierfür musste der Faltenbalg gelöst werden. Eine Akkommodation verschiedener Bohrwerkzeuggeräte war wohl nicht möglich. Durch die Anordnung des Bohrwerkzeuggeräts außerhalb der Vorschubeinrichtung ist das Bohrfutter zum Einsetzen und Auswechseln von Bohrwerkzeugen frei zugänglich. Es besteht auch die Möglichkeit, verschiedene Bohrwerkzeuggeräte mitzuführen und an der erfindungsgemäßen Vorrichtung zu montieren, so dass eine Handhabungsvorrichtung für eine Anzahl von Bohrmaschinen benutzt werden kann. Dadurch, dass das Bohrwerkzeuggerät außerhalb der Vorschubeinrichtung angeordnet ist, ist es besser gegen im Zuge der Bearbeitung anfallenden Bohrstaub geschützt, indem sich vorzugsweise nur das Bohrwerkzeug in einen zur Absaugung von Bohrstaub unterdruckbeaufschlagbaren Bereich der Absaugeinrichtung hineinerstreckt. Der Futterkörper selbst kann außerhalb verbleiben.

Die erfindungsgemäße Vorrichtung ist weiter in vorteilhafter Weise so ausgebildet, dass die Vorschubeinrichtung keine gegeneinander bewegbaren Dichtflächen aufweist, wie dies beispielsweise bei der Vorschubeinrichtung nach DE 103 19 597.1 der Fall ist, die eine Kolben/Zylinderanordnung aufweist, wobei die Bohrmaschine an dem Kolben geklemmt ist. Gegeneinander bewegbare Dichtflächen erweisen sich stets als problematisch, da ein gewisser Leckluftstrom nicht vermieden werden kann, ohne die Leichtgängigkeit der Vorrichtung zu beeinträchtigen. Ein solcher Leckluftstrom kann sich aber, wenn höchste Ansaugkräfte erforderlich sind, als nachteilig erweisen. Nach einer bevorzugten Ausführungsform weist die Vorschubeinrichtung einen Faltenbalg zwischen einem unterdruckbeaufschlagbaren bewegbaren Kolben und einem unterdruckbeaufschlagbaren Basisteil oder Zylinderteil auf. Der Kolben, welcher die Montageeinrichtung für das Bohrwerkzeuggerät trägt, kann dann durch Unterdruckbeaufschlagung des Inneren des Faltenbalgs gegenüber dem Basisteil oder Zylinderteil in der Vorschubrichtung, also entlang der Vorschubachse der Vorschubeinrichtung bewegt werden. Hierfür sind vorzugsweise zwischen Kolben und Basisbauteil wirkende Führungsmittel, etwa Führungsstangen, vorgesehen, die vorteilhafterweise im Inneren des Faltenbalgs und des Basisbauteils untergebracht sind. Sie können auch in vorteilhafter Ausführung eine Hubbegrenzung, insbesondere durch Anschlagmittel, bewirken.

In Weiterbildung der Erfindung von besonderer Bedeutung umfasst die Absaugeinrichtung einen von einem Werkzeugansetzbereich der Einrichtung zu dem Anschluss für die Unterdruckquelle erstreckten Absaugkanal. Der Absaugkanal ist vorzugsweise von einem zu der ebenen Oberfläche offenen Ansaugbereich der Ansaugeinrichtung getrennt. Auf diese Weise wird abgesaugter Bohrstaub nicht durch den Ansaugbereich der Ansaugeinrichtung hindurchgeführt und die Ansaugseite der erfindungsgemäßen Vorrichtung sowie die zu bearbeitende Fläche werden nicht verunreinigt. Andererseits wird zumindest in gewissem Maße eine Entkopplung des Unterdrucks und damit der Ansaugkraft der Ansaugeinrichtung vom Unterdruck innerhalb der Absaugeinrichtung erreicht.

Es erweist sich weiter als besonders vorteilhaft, wenn die erfindungsgemäße Handhabungsvorrichtung eine erste Steuervorrichtung zum Anlegen von Unterdruck an die Ansaugeinrichtung aufweist. Die Steuervorrichtung könnte so ausgebildet sein, dass sie eine Unterdruckquelle, beispielsweise einen sich bekannten üblichen Allessauger einschaltet, oder dass sie einen am Anschluss der Vorrichtung zur Verfügung stehenden Unterdruck an die Ansaugeinrichtung anlegt. In vorteilhafter Weise ist die erste Steuervorrichtung so ausgebildet, dass sie eine Strömungskommunikation zwischen einem Ansaugbereich der Ansaugeinrichtung und dem genannten Anschluss für die Unterdruckquelle freizugeben oder zu verschließen vermag.

Es erweist sich auch als vorteilhaft, wenn die erfindungsgemäße Handhabungsvorrichtung eine zweite Steuervorrichtung zum Anlegen von Unterdruck an die Vorschubeinrichtung aufweist. Wiederum kann diese zweite Steuervorrichtung so ausgebildet sein, dass sie eine Strömungskommunikation zwischen der unterdruckbeaufschlagbaren Seite des Kolbens der Vorschubeinrichtung und dem Anschluss für die Unterdruckquelle freizugeben oder zu verschließen vermag.

Des Weiteren kann es sich als vorteilhaft erweisen, wenn eine dritte Steuervorrichtung zum Anlegen von Unterdruck an die Absaugeinrichtung vorgesehen ist. Es hat sich als ausreichend und zweckmäßig erwiesen, wenn diese dritte Steuervorrichtung eine Unterbrechungsvorrichtung oder eine Drosselvorrichtung umfasst, mittels derer der Saugluftstrom von dem Werkzeugansetzbereich der erfindungsgemäßen Vorrichtung zu dem Anschluss für die Unterdruckquelle unterbrechbar bzw. drosselbar ist. Solchenfalls wird mit der dritten Steuervorrichtung vorzugsweise nicht auf den Betrieb der Unterdruckquelle Einfluss genommen, sondern bei anstehendem Unterdruck wird ein sich einstellender Bohrstaub führender Saugluftstrom ungedrosselt oder gedrosselt abgeführt, oder die Strömungskommunikation wird gesperrt oder unterbrochen.

Nach einem weiteren Erfindungsgedanken wirken die erste und die zweite Steuervorrichtung derart zusammen, dass eine Betätigung der zweiten Steuervorrichtung zum Anlegen von Unterdruck an die Vorschubeinrichtung nur im betätigten Zustand der ersten Steuervorrichtung möglich ist, wenn also Unterdruck an der Ansaugeinrichtung anliegt, damit diese gegen die zu bearbeitende Oberfläche angesaugt werden kann.

Erst im angesaugten Zustand der Handhabungsvorrichtung soll nämlich die Bearbeitung ausgeführt werden. Eine unkontrollierte unbeabsichtigte Betätigung der Vorschubeinrichtung im noch nicht angesaugten Zustand der Handhabungsvorrichtung könnte nämlich zu einer Beschädigung der Oberfläche führen und würde auch eine Gefahr für den Benutzer oder Dritte mit sich bringen, beispielsweise könnte dies dazu führen, dass der Benutzer die Handhabungsvorrichtung mit dem eingespannten Bohrwerkzeuggerät fallenlässt.

Nach einem noch weitergehenden und ebenso vorteilhaften Erfindungsgedanken wirken die erste und die zweite Steuervorrichtung derart zusammen, dass bei betätigter zweiter Steuervorrichtung, also bei aktivierter Vorschubeinrichtung, eine Unterbrechung der Unterdruckbeaufschlagung der Ansaugeinrichtung gesperrt wird. Auf diese Weise sollen Folgen eine Fehlbedienung durch den Benutzer, etwa ein Loslassen eines Betätigungsschalters für die erste Steuervorrichtung, vermieden werden, damit dies nicht zum Nachlassen der Ansaugkraft der Handhabungsvorrichtung führt, was mit großem Risiko verbunden wäre und daher unbedingt verhindert werden muss.

Die vorstehend erörterten Steuervorrichtungen können in an sich beliebiger Weise ausgebildet und realisiert werden. Sie können beispielsweise stößelbetätigte Ventilkörper umfassen, welche Strömungsquerschnitte je nach Ansteuerung verschließen oder freigeben. Sie können elektrische oder elektronische Steuerkomponenten mit darauf abgelegten Steuerprogrammen oder Prüfroutinen umfassen. Sie können in besonders vorteilhafter Weise Druckregelventile umfassen, bei denen ein Druck- oder Unterdruckbereich vorzugsweise stufenlos einstellbar sein kann, so dass durch Einbeziehung der Druckregelventile in die Steuervorrichtung die Ansaugkraft bzw. die Vorschubkraft der Komponenten vorgegeben und insbesondere variabel eingestellt werden kann. Die Steuervorrichtungen weisen vorzugsweise in einem Griffbereich vorgesehene Betätigungsmittel, beispielsweise in Form von Tastern, Schiebern oder dergleichen manuell bedienbare Betätigungselemente auf. Diese Betätigungsmittel sind in vorteilhafter Weise in eine Stellung vorgespannt, was vorzugsweise mechanisch realisiert sein kann.

Nach einer besonders bevorzugten Ausführungsform der erfindungsgemäßen Handhabungsvorrichtung sind ein erstes Betätigungsmittel und ein zweites Betätigungsmittel einander im Wesentlichen gegenüberliegend an einem Handgriff der Handhabungsvorrichtung vorgesehen, so dass sie manuell mit Daumen und Zeigefinger eines Benutzers ergreifbar sind.

Die erfindungsgemäße Handhabungsvorrichtung umfasst ferner in vorteilhafter Weise eine Tiefenerfassungseinrichtung oder eine Vorschuberfassungseinrichtung, durch welche eine Inaktivierung der Vorschubeinrichtung auslösbar ist. Vorteilhafterweise kann dies durch Belüften der unterdruckbeaufschlagbaren Seite der Vorschubeinrichtung erfolgen. Es erweist sich weiter als vorteilhaft, wenn unmittelbar im Anschluss hieran eine Rückbewegung der Vorschubeinrichtung einleitbar ist; beispielsweise könnte die Vorschubeinrichtung ein federvorgespanntes Rückstellmittel umfassen, welches im nicht aktivierten Zustand der Vorschubeinrichtung das Bohrwerkzeug oder Bohrwerkzeuggerät von der zu bearbeitenden Oberfläche zurückzieht. Die Tiefenerfassungseinrichtung oder die Vorschuberfassungseinrichtung könnten in an sich beliebiger Weise ausgebildet sein; sie können zweckmäßigerweise einen Taster oder an sich beliebige Sensoren aufweisen, die mit der zu bearbeitenden Oberfläche zusammenwirken oder eine vorgegebene Strecke des Vorschubs durch Kontakt, insbesondere durch einen Begrenzungsanschlag bei der Handhabungsvorrichtung selbst, erfassen.

Es erweist sich des Weiteren als vorteilhaft, wenn der Anschluss für die Unterdruckquelle schnappende, rastende oder in sonstiger Weise hintergreifende Sicherungsmittel umfasst, um ein unbeabsichtigtes Ablösen der Unterdruckquelle, insbesondere eines Saugschlauchs der Unterdruckquelle, zu verhindern.

Es erweist sich auch als vorteilhaft, wenn die Montageeinrichtung von der Handhabungsvorrichtung lösbar ist, um beispielsweise gegen eine andere mit einem anderen Spannkragendurchmesser ausgewechselt zu werden. Dies eröffnet die Möglichkeit, mehrere unterschiedliche Montageeinrichtungen, die für unterschiedliche Bohrwerkzeuggeräte ausgelegt sind, mitzuführen, so dass dieselbe Handhabungsvorrichtung für mehrere Bohrwerkzeuggeräte verwendet werden kann.

Nach einem weiteren Erfindungsgedanken erweist es sich als vorteilhaft, wenn die Absaugeinrichtung eine Gitterkomponente im Werkzeugansetzbereich aufweist, um ein Verstopfen der Ansaugöffnung zu verhindern.

Nach einem weiteren besonders vorteilhaften Erfindungsgedanken weist die Ansaugeinrichtung in ihrem zu der ebenen Oberfläche offenen Ansaugbereich eine Mehrzahl von Ansaugkammern oder Ansaugsegmenten auf. Sollte der Ansaugbereich, der insbesondere von einer auf Verschleiß beanspruchten insbesondere aus elastomerem Material gebildeten Saugplatte mit Dichträndern gebildet oder begrenzt sein kann, an einer Stelle eine Beschädigung aufweisen, so kann durch die Segmentierung verhindert werden, dass der Unterdruck im gesamten Ansaugbereich zusammenbricht und sich die Handhabungsvorrichtung unbeabsichtigt ablöst. Diese Entkopplung einzelner Ansaugkammern voneinander kann in vorteilhafter Weise durch Strömungsbegrenzungsventile unterstützt werden. Sollte sich in einer Ansaugkammer oder einem Ansaugsegment infolge einer Beschädigung stoßartig ein starker Saugluftstrom einstellen, so könnten diese Strömungsbegrenzungsventile dieses Segment strömungsmäßig abtrennen, so dass die dortige Leckage die Funktion der Ansaugeinrichtung im Übrigen nicht beeinträchtigt.

Es erweist sich auch als vorteilhaft, wenn die Montageeinrichtung für das Bohrwerkzeug oder Bohrwerkzeuggerät und die Vorschubeinrichtung gegen eine Ansaugebene der Ansaugeinrichtung neigbar sind. Auf diese Weise lässt sich auch eine Bearbeitung in Winkeln zwischen 0 und 90° zu der Ansaugebene ausführen.

Nach einem weiteren Erfindungsgedanken erweist es sich als vorteilhaft, wenn die erfindungsgemäße Handhabungsvorrichtung einen Unterdruckspeicher für eine Notfallfunktion aufweist. Sollte unbeabsichtigt die Unterdruckquelle ausfallen, so könnte durch entsprechende Steuerungskomponenten der Unterdruckspeicher zur Weiterführung der Ansaugfunktion eingesetzt werden, um ein unbeabsichtigtes Ablösen der Handhabungsvorrichtung zumindest für einen gewissen Zeitraum zu verhindern. An dieser Stelle sei auch erwähnt, dass zur Erzeugung des Unterdrucks zum Ansaugen der Handhabungsvorrichtung an eine Oberfläche auch eine Überdruckquelle, beispielsweise eine Pressluftquelle eingesetzt werden kann, wobei dann unter Verwendung von Ejektoren unter Ausnutzung des Venturi-Prinzips ein Unterdruck erzeugt werden kann.

Weitere Merkmale, Einzelheiten und Vorteile der Erfindung ergeben sich aus den beigefügten Patentansprüchen, für deren Merkmale auch losgelöst von ihrer Rückbeziehung auf andere Ansprüche selbständiger Schutz in Anspruch genommen wird, und aus der zeichnerischen Darstellung und nachfolgenden Beschreibung einer bevorzugten Ausführungsform der erfindungsgemäßen Handhabungsvorrichtung. In der Zeichnung zeigt:
- Figur 1: eine perspektivische Ansicht einer erfindungsgemäßen Handhabungsvorrichtung für ein Bohrwerkzeuggerät;
- Figur 2: eine Schnittansicht der Handhabungsvorrichtung nach Figur 1;
- Figuren 3, 4: eine schematische Darstellung zweier Betriebszustände von Betätigungselementen im Handgriff der Vorrichtung nach Figur 1;
- Figuren 5, 6: eine schematische Darstellung der mechanischen Kopplung der Betätigungselemente nach Figuren 3, 4 und
- Figur 7: eine Darstellung einer Abdeckung für den Werkzeugansetzbereich.

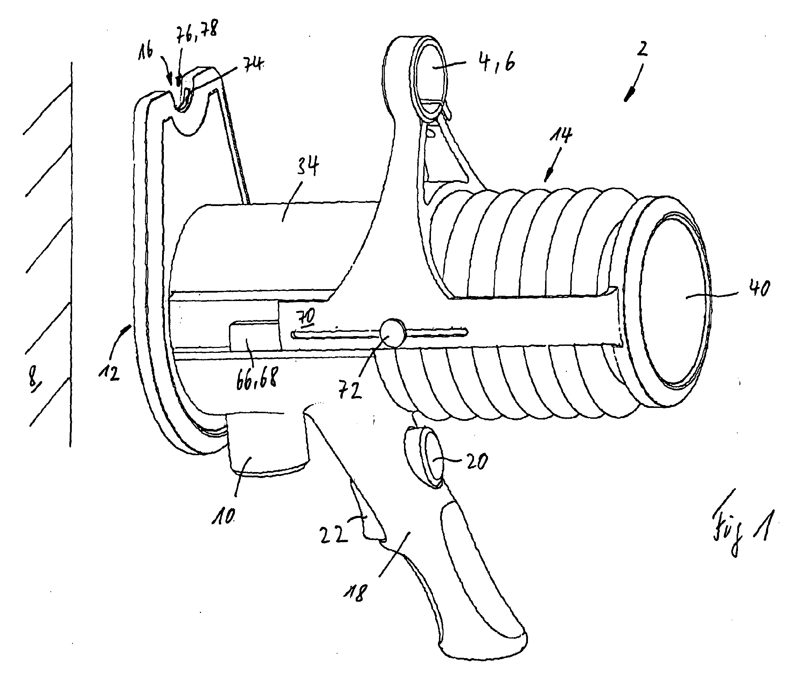

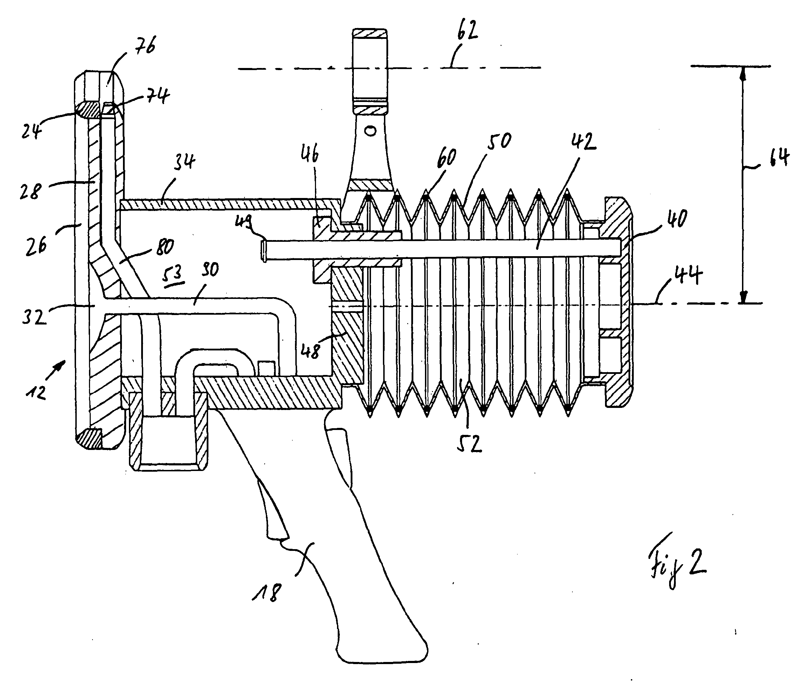

Die Figuren 1 und 2 zeigen eine insgesamt mit dem Bezugszeichen 2 bezeichnete Vorrichtung zum Handhaben eines nicht dargestellten Bohrwerkzeuggeräts, welches in einer Montageeinrichtung 4, die im dargestellten Fall als Spannkragen 6 ausgebildet ist, geklemmt werden kann. Die Vorrichtung 2 ist dann zusammen mit dem Bohrwerkzeuggerät gegen eine schematisch angedeutete Oberfläche 8, beispielsweise einer Wand, anlegbar und dort ansaugbar. Hierfür weist die Vorrichtung 2 einen Anschluss 10 für einen Saugschlauch einer nicht dargestellten Unterdruckquelle, beispielsweise eines üblichen Allessaugers auf (es könnte aber auch an der Vorrichtung selbst ein Sauggebläse vorgesehen sein). Die Vorrichtung 2 umfasst eine noch näher zu beschreibende Ansaugeinrichtung 12 zum lösbaren Fixieren der Vorrichtung 2 an der im Wesentlichen ebenen Oberfläche 8, eine Vorschubeinrichtung 14 zur Unterstützung des Vorschubs des Bohrwerkzeuggeräts bei der Ausführung des Bohrvorgangs und eine Absaugeinrichtung 16 zum Absaugen von Bohrstaub. Nach dem Einspannen des nicht dargestellten Bohrwerkzeuggeräts und der Verbindung mit einer Unterdruckquelle am Anschluss 10 ist die Vorrichtung 2 an einem Handgriff 18 ergreifbar und an der beabsichtigten Stelle an der Oberfläche 8 positionierbar. Durch Drücken noch näher zu beschreibender Betätigungselemente 20, 22 sind die vorstehend erwähnten Einrichtungen zum Ansaugen der Vorrichtung 2 gegen die Oberfläche 8 und zur Ausführung des Vorschubs während des Bohrvorgangs und zum Absaugen von Bohrstaub aktivierbar.

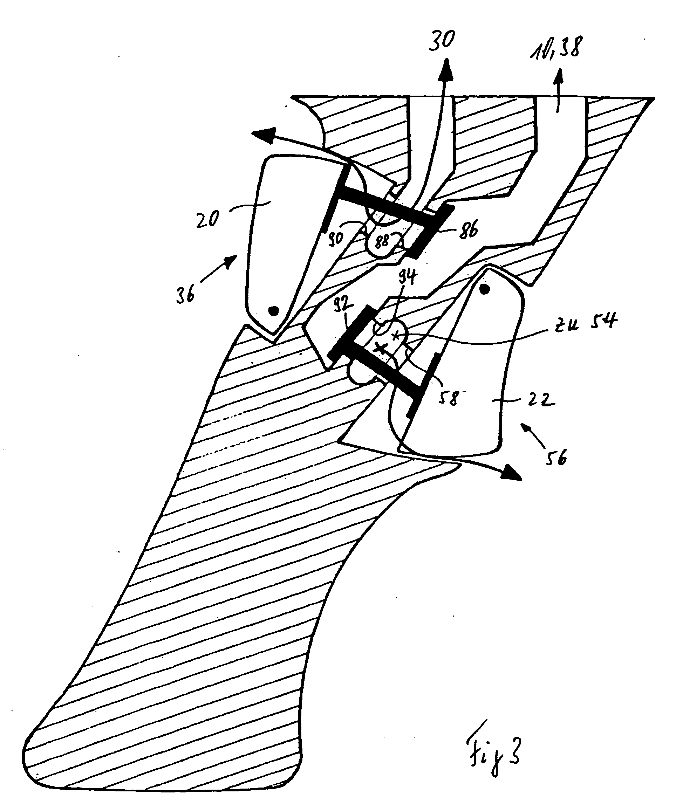

Die Ansaugeinrichtung 12 umfasst ein elastomeres Dichtmittel 24, welches einen Ansaugbereich 26 auf der der Oberfläche 8 zugewandten Seite eines plattenförmigen Basisbauteils 28 begrenzt. Das elastomere Dichtmittel 24 bildet einen umlaufenden Dichtungsrand, welcher Unebenheiten der Oberfläche 8 weitgehend ausgleicht. In dem Ansaugbereich 26 mündet eine erste Leitung 30 in einem durchmessererweiterten Bereich 32. Diese erste Leitung führt in das Innere eines an das plattenförmige Basisbauteil 28 angefügten zylindrischen Basisbauteils 34 der Vorrichtung 2 und von dort in das Innere des Handgriffs 18. Dort ist eine noch näher zu beschreibende erste Steuervorrichtung 36 vorgesehen (s. Figur 3), welche einen Strömungsquerschnitt zwischen der ersten Leitung 30 und einer zweiten Leitung 38, welche vom Handgriff 18 zu dem Anschluss 10 für die Unterdruckquelle führt, verschließt oder freigibt. Ist der Strömungsquerschnitt freigegeben und liegt am Anschluss 10 ein Unterdruck an, so wird der Ansaugbereich 26 der Ansaugeinrichtung 12 im an die Oberfläche 8 angelegten Zustand dort festgesaugt.

Die Vorschubeinrichtung 14 ist wie folgt ausgebildet: Ein Kolben 40 ist über drei Kolbenstangen 42 (von denen in Figur 2 eine dargestellt ist), entlang einer Vorschubachse 44 verschieblich gegen das zylindrische Basisbauteil 34 angeordnet. Die Kolbenstangen 42 sind über Gleitlagerbuchsen 46, die in eine quer zur Vorschubachse 44 verlaufende Wandung 48 des zylindrischen Basisbauteils 34 eingesetzt sind, verschieblich geführt. Am Ende der Kolbenstangen 42 ist jeweils ein Sicherungsring 49 als Endanschlag vorgesehen. Der Kolben 40 ist über einen Faltenbalg 50 derart dichtend mit dem zylindrischen Basisbauteil 34 verbunden, dass die Komponenten einen gasdichten expandierbaren bzw. kontrahierbaren Zylinderraum 52 für den Kolben 40 bilden. Der Zylinderraum 52 kommuniziert über (nicht dargestellte) Öffnungen mit dem Inneren 53 des zylindrischen Basisbauteils 34 und von dort über einen verhältnismäßig kurzen Leitungsabschnitt 54 mit einer wiederum im Inneren des Handgriffs 18 vorgesehenen zweiten Steuervorrichtung 56, die einen Strömungsquerschnitt zwischen dem Leitungsabschnitt 54 und der zweiten Leitung 38 zum Anschluss 10 für die Unterdruckquelle freigibt oder verschließt. Ist der Strömungsquerschnitt verschlossen, so kommuniziert der Leitungsabschnitt 54 über eine Entlüftungsöffnung 58 (Figur 3) mit der Umgebung, und ein innerhalb des Faltenbalgs 50 vorgesehenes Federmittel 60 drückt den Kolben 40 entgegen der Vorschubrichtung, also in der Figur 2 nach rechts. Wird die Strömungsverbindung indessen freigegeben, so wird über die zweite Leitung 38, den Handgriff 18 und den Leitungsabschnitt 54 ein Unterdruck in das Innere 53 des Basisbauteils 34 und damit in den Zylinderraum 52 angelegt, und der Kolben 40 wird entlang der Vorschubachse 44 in der Vorschubrichtung bewegt. Wie aus Figur 1 ersichtlich, ist die Montageeinrichtung 4 starr mit dem Kolben 40 verbunden, so dass ein dort eingespanntes Bohrwerkzeuggerät ebenfalls in der Vorschubrichtung bewegt wird. Das Bohrwerkzeuggerät ist dabei außerhalb des unterdruckbeaufschlagbaren Bereichs, also des Zylinderraums 52, der Vorschubeinrichtung 14 angeordnet. Eine Längsachse 62 des Bohrwerkzeugs oder Bohrwerkzeuggeräts verläuft parallel, jedoch in einem Abstand 64 von der Vorschubachse 44 der Vorschubeinrichtung 14. Auf diese Weise kann das Bohrwerkzeuggerät einfach gegen ein anderes ausgetauscht werden. Da das Bohrfutter frei zugänglich ist, kann auch das Bohrwerkzeug auf einfache Weise ausgetauscht werden, ohne die Handhabungsvorrichtung 2 insgesamt demontieren zu müssen.

Man erkennt in Figur 1 des Weiteren Längsführungsmittel 66 in Form einer Schiene 68 am Außenumfang des zylindrischen Basisbauteils 34, welche eine Tragleiste 70 der Verbindung zwischen Montageeinrichtung 4 und Kolben 40 längsverschieblich führt. Außerdem dargestellt ist ein in verschiedenen Positionen in Richtung des Längsführungsmittels 66 fixierbares Anschlagmittel 72 in Form einer Klemmschraube, welches zur Vorschubbegrenzung der Vorschubeinrichtung 14 dient.

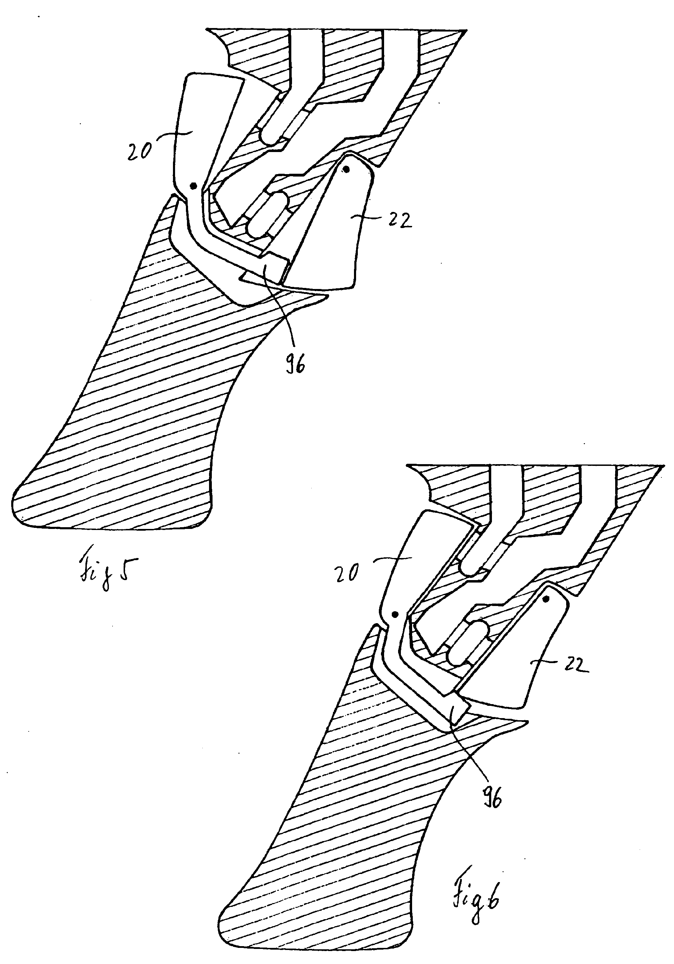

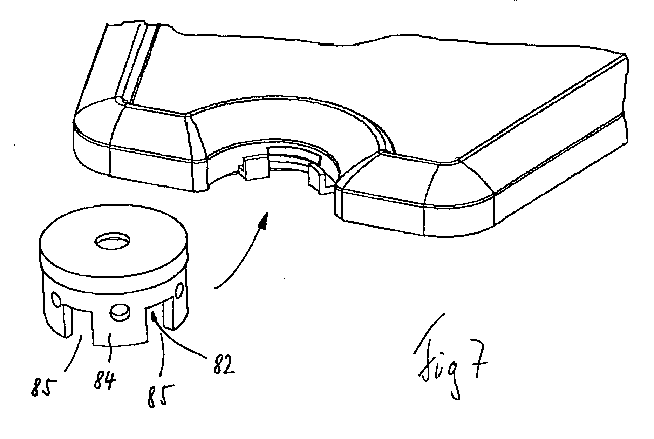

Die Absaugeinrichtung 16 umfasst eine oder mehrere Ansaugöffnungen 74 in einem Werkzeugansetzbereich 76 der Vorrichtung 2. Dieser Werkzeugansetzbereich 76 ist, wie aus Figur 1 ersichtlich, von einer im Wesentlichen halbkreisscheibenförmigen Ausnehmung 78 in dem plattenförmigen Basisbauteil 28 gebildet. Von der Ansaugöffnung 74 führt eine dritte Leitung 80 zu dem Anschluss 10 für die Unterdruckquelle. Diese dritte Leitung bildet einen Strömungskanal, der von dem Ansaugbereich 26 der Ansaugeinrichtung 12 getrennt ist. Wie aus Figur 7 ersichtlich, kann eine eine Absaugkammer 82 begrenzende Komponente 84 im Werkzeugansetzbereich 76 lösbar befestigt, insbesondere eingeklipst oder eingerastet werden. Diese Komponente umfasst eine beispielsweise durch Borsten verschließbare, jedoch vom Bohrwerkzeug des Bohrwerkzeuggeräts durchdringbare Öffnung und überfängt einen Werkzeugansetzbereich der Oberfläche 8. Durch Öffnungen 85 in der Gehäusekomponente 84 wird ein Saugluftstrom in das Innere der Absaugkammer 82 erzeugt. Die hierbei auftretenden Turbulenzen führen zu einer weitgehenden Absaugung von Bohrstaub. Die Ansaugöffnung kann aber auch durch blendenartige nicht dargestellte Mittel verschlossen werden, wenn keine Absaugung erwünscht ist. Durch Verdrehen der Komponente 84 kann eine Drosselung des Saugluftstroms erreicht werden.

Figur 3 verdeutlicht schematisch den nicht betätigten Zustand der Handhabungsvorrichtung 2. Sowohl das Betätigungselement 20 der ersten Steuervorrichtung 36 als auch das Betätigungselement 22 der zweiten Steuervorrichtung 56 befinden sich unter der Wirkung einer Federvorspannung (nicht dargestellt) im nicht gedrückten Zustand. Dabei verschließt ein Ventilkörper 86 der ersten Steuervorrichtung 36 einen Strömungsquerschnitt 88 zwischen der ersten zum Ansaugbereich 26 führenden Leitung 30 und der zweiten Leitung 38, welche zum Anschluss 10 für die Unterdruckquelle führt. Über eine Entlüftungsöffnung 90 ist die erste Leitung 30 mit der Umgebung verbunden und daher entlüftet. Ebenso verschließt ein Ventilkörper 92 einen Strömungsquerschnitt 94 zwischen der zweiten Leitung 38 zum Anschluss 10 und dem Leitungsabschnitt 54 in das Innere 53 des Basisbauteils 34 und den Zylinderraum 52. Über die bereits erwähnte Entlüftungsöffnung 58 ist der Zylinderraum 52 entlüftet.

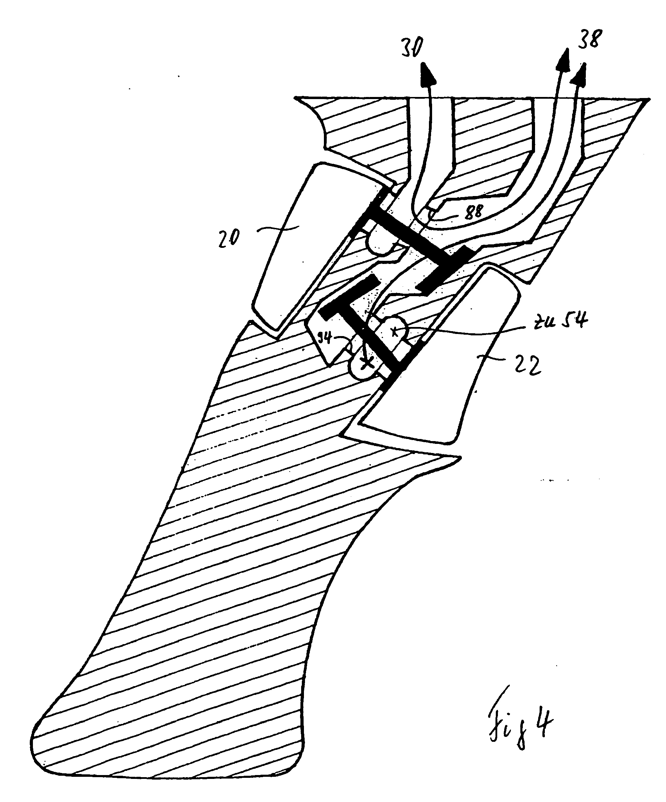

Figur 5 verdeutlicht eine mechanische Kopplung oder Hemmung der Betätigungselemente 20 und 22 über ein in Figur 5 beispielsweise als Hebelarm 96 dargestelltes Mittel. In der dargestellten Position des Betätigungselementes 20 lässt sich das Betätigungselement 22 aufgrund der Hemmung durch den Hebelarm 96 nicht niederdrücken.

Figur 4 verdeutlicht den betätigten Zustand der Handhabungsvorrichtung 2. Durch Niederdrücken des Betätigungselementes 20 wird der Strömungsquerschnitt 88 freigegeben und über die erste Leitung 30 und die zweite Leitung 38 wird der Ansaugbereich 26 der Ansaugeinrichtung 12 evakuiert, so dass die Handhabungsvorrichtung 2 insgesamt gegen die Oberfläche 8 angesaugt wird. Wird hiervon ausgehend das Betätigungselement 22 der zweiten Steuervorrichtung 56 in die in Figur 4 dargestellte Position niedergedrückt, so wird auch der Strömungsquerschnitt 94 zwischen der zweiten Leitung 38 und dem Leitungsabschnitt 54 in das Innere 53 des Basisbauteils 34 und den Zylinderraum 52 freigegeben, und es baut sich in dem Zylinderraum 52 ein Unterdruck auf, so dass der Kolben 40 in der Figur 2 nach links, also in Richtung der Vorschubachse 44 zur Ausführung des Bohrvorgangs bewegt wird. Wie aus Figur 6 ersichtlich ist, wird beim Niederdrücken des Betätigungselementes 20 der Hebelarm 96 in Uhrzeigersinnrichtung aus dem Bewegungsweg des Betätigungselementes 22 verschwenkt, so dass auch dieses in die in Figur 6 dargestellte Position gedrückt werden kann. In dieser Position ist das Betätigungselement 20 gegen ein Zurückschwenken in die in Figur 5 gezeigte Position gesichert, indem der Hebelarm 96 gegen das niedergedrückte Betätigungselement 22 anliegt. Auch wenn das Betätigungselement 22 ungewollt losgelassen wird, indem ein Benutzer mit dem Daumen abrutscht oder den Daumen von dem Betätigungselement 20 löst, bleibt der Strömungsquerschnitt 88 freigegeben und damit die Ansaugeinrichtung aktiviert.

## Patentansprüche

1. Vorrichtung (2) zum Handhaben eines Bohrwerkzeugs oder Bohrwerkzeuggeräts, insbesondere einer Bohrmaschine oder eines Bohrhammers, mit einer Montageeinrichtung für das Bohrwerkzeug oder Bohrwerkzeuggerät, mit einer Ansaugeinrichtung (12) zum lösbaren Fixieren der Vorrichtung (2) an einer ebenen Fläche (8) und mit einer Vorschubeinrichtung (14) für das Bohrwerkzeug oder Bohrwerkzeuggerät zur Unterstützung des Vorschubs bei der Ausführung des Bohrvorgangs, und mit einer Unterdruckquelle oder einem Anschluss (10) für eine Unterdruckquelle und mit einer Absaugeinrichtung (16) für Bohrstaub, wobei der Anschluss (10) mit der Ansaugeinrichtung (12) zum Ansaugen gegen die ebene Fläche (8) und mit der Absaugeinrichtung (16) zum Absaugen von Bohrstaub und mit der Vorschubeinrichtung (14) zur Unterstützung des Vorschubs kommuniziert, **dadurch gekennzeichnet, dass** eine Vorschubachse (44) der Vorschubeinrichtung (14) und eine Längsachse (62) des Bohrwerkzeugs oder Bohrwerkzeuggeräts parallel jedoch in einem Abstand (64) zueinander angeordnet sind, sodass das Bohrwerkzeug oder Bohrwerkzeuggerät außerhalb des unterdruckbeaufschlagbaren Teils der Vorschubeinrichtung (14) angeordnet ist.

2. Vorrichtung nach Anspruch 1, **dadurch gekennzeichnet, dass** die Vorschubeinrichtung (14) keine gegeneinander bewegbaren Dichtflächen aufweist.

3. Vorrichtung nach Anspruch 1 oder 2, **dadurch gekennzeichnet, dass** die Vorschubeinrichtung (14) einen Faltenbalg (50) zwischen einem unterdruckbeaufschlagbaren bewegbaren Kolben (40) und einem unterdruckbeaufschlagbaren Basisbauteil (34) aufweist.

4. Vorrichtung nach einem der vorstehenden Ansprüche, **dadurch gekennzeichnet, dass** im Inneren des Faltenbalgs (50) und des Basisbauteils (34) zwischen Kolben (40) und Basisbauteil (34) wirkende Führungsmittel (42) vorgesehen sind.

5. Vorrichtung nach einem der vorstehenden Ansprüche, **dadurch gekennzeichnet, dass** die Absaugeinrichtung (16) einen von einem Werkzeugansetzbereich (76) der Vorrichtung zu dem Anschluss (10) für die Unterdruckquelle erstreckten Absaugkanal (80) umfasst, der von einem zu der ebenen Oberfläche (8) offenen Ansaugbereich (26) der Ansaugeinrichtung (16) getrennt ist.

6. Vorrichtung nach einem der vorstehenden Ansprüche, **dadurch gekennzeichnet, gekennzeichnet durch** eine erste Steuervorrichtung (36) zum Anlegen von Unterdruck an die Ansaugeinrichtung (12).

7. Vorrichtung nach einem der vorstehenden Ansprüche, **dadurch gekennzeichnet, dass** die erste Steuervorrichtung (36) eine Strömungskommunikation zwischen einem Ansaugbereich (26) der Ansaugeinrichtung (12) und der Unterdruckquelle oder dem Anschluss (10) für die Unterdruckquelle freizugeben oder zu verschließen vermag.

8. Vorrichtung nach einem der vorstehenden Ansprüche, **dadurch gekennzeichnet, gekennzeichnet durch** eine zweite Steuervorrichtung (56) zum Anlegen von Unterdruck an die Vorschubeinrichtung (14).

9. Vorrichtung nach einem der vorstehenden Ansprüche, **dadurch gekennzeichnet, dass** die zweite Steuervorrichtung (56) eine Strömungskommunikation zwischen der unterdruckbeaufschlagbaren Seite des Kolbens (40) der Vorschubeinrichtung (14) und der Unterdruckquelle oder dem Anschluss (10) für die Unterdruckquelle freizugeben oder zu verschließen vermag.

10. Vorrichtung nach einem der vorstehenden Ansprüche, **gekennzeichnet durch** eine dritte Steuervorrichtung zum Anlegen von Unterdruck an die Absaugeinrichtung.

11. Vorrichtung nach einem der vorstehenden Ansprüche, **dadurch gekennzeichnet, dass** die dritte Steuervorrichtung eine Unterbrechungsvorrichtung oder eine Drosselvorrichtung umfasst, mittels derer der Saugluftstrom von dem Werkzeugansetzbereich (76) der Vorrichtung zu der Unterdruckquelle oder dem Anschluss für die Unterdruckquelle unterbrechbar bzw. drosselbar ist.

12. Vorrichtung nach einem der vorstehenden Ansprüche, **dadurch gekennzeichnet, dass** die erste und die zweite Steuervorrichtung (36, 56) derart zusammenwirken, dass eine Betätigung der zweiten Steuervorrichtung (56) zum Anlegen von Unterdruck an die Vorschubeinrichtung (14) nur im betätigten Zustand der ersten Steuervorrichtung (36) möglich ist.

13. Vorrichtung nach einem der vorstehenden Ansprüche, **dadurch gekennzeichnet, dass** die erste und die zweite Steuervorrichtung (36, 56) derart zusammenwirken, dass bei betätigter zweiter Steuervorrichtung (56) eine Unterbrechung der Unterdruckbeaufschlagung der Ansaugeinrichtung (12) gesperrt wird.

14. Vorrichtung nach einem der vorstehenden Ansprüche, **dadurch gekennzeichnet, dass** die Steuervorrichtungen (36, 56) stößelbetätigte Ventilkörper (86, 92) umfassen.

15. Vorrichtung nach einem der vorstehenden Ansprüche, **dadurch gekennzeichnet, dass** die Steuervorrichtungen (36, 56) vorzugsweise stufenlos einstellbare Druckregelventile umfassen, mittels derer Ansaugkraft bzw. Vorschubkraft einstellbar sind.

16. Vorrichtung nach einem der vorstehenden Ansprüche, **dadurch gekennzeichnet, dass** Steuervorrichtungen (36, 56) vorzugsweise in einem Griffbereich vorgesehene Betätigungsmittel (20, 22) aufweisen.

17. Vorrichtung nach einem der vorstehenden Ansprüche, **dadurch gekennzeichnet, dass** die Betätigungsmittel (20, 22) in eine Stellung vorgespannt sind.

18. Vorrichtung nach einem der vorstehenden Ansprüche, **dadurch gekennzeichnet, dass** ein erstes Betätigungsmittel (20) und ein zweites Betätigungsmittel (22) einander im wesentlichen gegenüberliegend an einem Handgriff (18) der Vorrichtung vorgesehen sind.

19. Vorrichtung nach einem der vorstehenden Ansprüche, **dgekennzeichnet durch** eine Tiefenerfassungseinrichtung, **durch** welche eine Inaktivierung der Vorschubeinrichtung (14)auslösbar ist.

20. Vorrichtung nach einem der vorstehenden Ansprüche, **dadurch gekennzeichnet, dass** die Tiefenerfassungseinrichtung einen Taster umfasst.

21. Vorrichtung nach einem der vorstehenden Ansprüche, **dadurch gekennzeichnet, dass** die Tiefenerfassungseinrichtung einen einstellbaren Tiefenanschlag umfasst.

22. Vorrichtung nach einem der vorstehenden Ansprüche, **dadurch gekennzeichnet, dass** der Anschluss (10) für die Unterdruckquelle schnappende, rastende oder in sonstiger Weise hintergreifende Sicherungsmittel umfasst, um ein unbeabsichtigtes Ablösen der Unterdruckquelle zu verhindern.

23. Vorrichtung nach einem der vorstehenden Ansprüche, **dadurch gekennzeichnet, dass** die Montageeinrichtung (4) von der Vorrichtung (2) lösbar ist.

24. Vorrichtung nach einem der vorstehenden Ansprüche, **dadurch gekennzeichnet, dass** die Absaugeinrichtung (16) eine Gitterkomponente im Werkzeugansetzbereich aufweist.

25. Vorrichtung nach einem der vorstehenden Ansprüche, **dadurch gekennzeichnet, dass** die Ansaugeinrichtung (12) in ihrem zu der ebenen Oberfläche offenen Ansaugbereich eine Mehrzahl von Ansaugkammern aufweist (Segmentierung).

26. Vorrichtung nach einem der vorstehenden Ansprüche, **dadurch gekennzeichnet, dass** den Ansaugkammern Strömungsbegrenzungsventile zugeordnet sind.

27. Vorrichtung nach einem der vorstehenden Ansprüche, **dadurch gekennzeichnet, dass** die Montageeinrichtung (4) und die Vorschubeinrichtung (14) gegen eine Ansaugebene der Ansaugeinrichtung neigbar sind.

28. Vorrichtung nach einem der vorstehenden Ansprüche, **dadurch gekennzeichnet, gekennzeichnet durch** einen Unterdruckspeicher für eine Notfallfunktion.

29. Vorrichtung nach einem der vorstehenden Ansprüche, **dadurch gekennzeichnet, gekennzeichnet durch** einen Näherungsschalter im Ansaugbereich (26) der Ansaugeinrichtung (12) zum automatischen Starten des Ansaugvorgangs.

30. Vorrichtung nach einem der vorstehenden Ansprüche, **dadurch gekennzeichnet, dass** die Absaugeinrichtung (16) eine lösbare, die Werkzeugansetzstelle überfangende Abdeckung (84) aufweist.

31. Vorrichtung nach einem der vorstehenden Ansprüche, **dadurch gekennzeichnet, dass** die Abdeckung (84) lösbar einrastbar, einklipsbar oder einsteckbar ist.

32. Vorrichtung nach einem der vorstehenden Ansprüche, **dadurch gekennzeichnet, dass** die Abdeckung (84) nur das Bohrwerkzeug überfängt.

33. Vorrichtung nach einem der vorstehenden Ansprüche, **dadurch gekennzeichnet, dass** ein Dichtmittel (24) im Ansaugbereich (26) der Ansaugeinrichtung (12) lösbar und austauschbar ist.

34. Vorrichtung nach einem der vorstehenden Ansprüche, **dadurch gekennzeichnet, gekennzeichnet durch** einen gelenkigen Anschluss für einen Saugschlauch einer Unterdruckquelle.

## Claims

1. Device (2) for handling a drill or drill apparatus, in particular a hand drill or a hammer drill, with a mounting device for the drill or drill apparatus, with a suction device (12) for detachable fixing of the device (2) to a flat surface (8) and with a feed device (14) for the drill or drill apparatus to support the feed during execution of the drilling process, and with a vacuum source or a connection (10) for a vacuum source and with an extraction device (16) for drill dust, wherein the connection (10) communicates with the suction device (12) for suction against the flat surface (8) and with the extraction device (16) for extracting drill dust and with the feed device (14) for supporting the feed, **characterised in that** a feed axis (44) of the feed device (14) and a longitudinal axis (62) of the drill or drill apparatus are arranged parallel but at a distance (64) from one another, so the drill or drill apparatus is arranged outside the part of the feed device (14) which can be vacuum-charged.

2. Device according to claim 1, **characterised in that** the feed device (14) has no sealing faces movable in respect of one another.

3. Device according to claim 1 or 2, **characterised in that** the feed device (14) has a concertina cover (50) between a movable piston (40) which can be vacuum-charged and a base component (34) which can be vacuum-charged.

4. Device according to one of the preceding claims, **characterised in that** guide means (42) acting between the piston (40) and the base component (34) are provided inside the concertina cover (50) and the base component (34).

5. Device according to one of the preceding claims, **characterised in that** the extraction device (16) comprises an extraction duct (80) extending from a tool attachment region (76) of the device to the connection (10) for the vacuum source and separated from a suction region (26) of the suction device (16) open to the flat surface (8).

6. Device according to one of the preceding claims, **characterised by** a first control device (36) for applying vacuum to the suction device (12).

7. Device according to one of the preceding claims, **characterised in that** the first control device (36) is capable of releasing or closing a flow communication between a suction region (26) of the suction device (12) and the vacuum source or the connection (10) for the vacuum source.

8. Device according to one of the preceding claims, **characterised by** a second control device (56) for applying vacuum to the feed device (14).

9. Device according to one of the preceding claims, **characterised in that** the second control device (56) is capable of releasing or closing a flow communication between the side of the piston (40) of the feed device (14) which is able to be vacuum-charged and the vacuum source or the connection (10) for the vacuum source.

10. Device according to one of the preceding claims, **characterised by** a third control device for applying vacuum to the extraction device.

11. Device according to one of the preceding claims, **characterised in that** the third control device comprises an interruption device or a throttle device, by means of which the suction air stream from the tool attachment region (76) of the device to the vacuum source or the connection for the vacuum source can be interrupted or throttled.

12. Device according to one of the preceding claims, **characterised in that** the first and the second control device (36, 56) cooperate in such a way that actuation of the second control device (56) to apply vacuum to the feed device (14) is possible only in the actuated state of the first control device (36).

13. Device according to one of the preceding claims, **characterised in that** the first and the second control device (36, 56) cooperate in such a way that when the second control device (56) is actuated, interruption of the vacuum charge of the suction device (12) is blocked.

14. Device according to one of the preceding claims, **characterised in that** the control devices (36, 56) comprise ram-actuated valve bodies (86, 92).

15. Device according to one of the preceding claims, **characterised in that** the control devices (36, 56) preferably comprise continuously adjustable pressure control valves, by means of which suction force or feed force can be adjusted.

16. Device according to one of the preceding claims, **characterised in that** control devices (36, 56) preferably have actuating means (20, 22) provided in a handle region.

17. Device according to one of the preceding claims, **characterised in that** the actuating means (20, 22) are biased into a position.

18. Device according to one of the preceding claims, **characterised in that** a first actuating means (20) and a second actuating means (22) are provided substantially opposite one another on a handle (18) of the device.

19. Device according to one of the preceding claims, **characterised by** a depth detection device by which inactivation of the feed device (14) can be triggered.

20. Device according to one of the preceding claims, **characterised in that** the depth detection device comprises a probe.

21. Device according to one of the preceding claims, **characterised in that** the depth detection device comprises an adjustable depth stop.

22. Device according to one of the preceding claims, **characterised in that** the connection (10) for the vacuum source comprises securing means which snap, latch or grip behind in some other manner, in order to prevent unintentional detaching of the vacuum source.

23. Device according to one of the preceding claims, **characterised in that** the mounting device (4) is detachable from the device (2).

24. Device according to one of the preceding claims, **characterised in that** the extraction device (16) has a grid component in the tool attachment region.

25. Device according to one of the preceding claims, **characterised in that** the suction device (12) has a plurality of suction chambers in its suction region open to the flat surface (segmentation).

26. Device according to one of the preceding claims, **characterised in that** the suction chambers are allocated flow-limiting valves.

27. Device according to one of the preceding claims, **characterised in that** the mounting device (4) and the feed device (14) are inclinable towards a suction plane of the suction device.

28. Device according to one of the preceding claims, **characterised by** a vacuum store for an emergency function.

29. Device according to one of the preceding claims, **characterised by** a proximity switch in the suction region (26) of the suction device (12) for automatic starting of the suction process.

30. Device according to one of the preceding claims, **characterised in that** the extraction device (16) has a detachable cover (84) overlaying the tool attachment point.

31. Device according to one of the preceding claims, **characterised in that** the cover (84) can be detachably latched in, clipped in or plugged in.

32. Device according to one of the preceding claims, **characterised in that** the cover (84) overlays only the drill.

33. Device according to one of the preceding claims, **characterised in that** a sealing means (24) is detachable and replaceable in the suction region (26) of the suction device (12).

34. Device according to one of the preceding claims, **characterised by** an articulated connection for a suction hose of a vacuum source.

## Revendications

1. Dispositif (2) pour manipuler un outil de forage ou un appareil à outil de forage, en particulier une foreuse ou un marteau perforateur, avec un dispositif de montage pour l'outil de forage ou l'appareil à outil de forage, avec un système d'aspiration (12) pour la fixation amovible du dispositif (2) sur une surface (8) plane et avec un dispositif d'avancement (14) pour l'outil de forage ou l'appareil à outil de forage pour soutenir l'avancement lors de l'exécution de l'opération de forage, et avec une source de dépression ou un branchement (10) pour une source de dépression et avec un système d'aspiration (16) pour la poussière de forage, le branchement (10) communiquant avec le système d'aspiration (12) pour l'aspiration vers la surface (8) plane et avec le dispositif d'aspiration (16) pour l'aspiration de la poussière de forage et avec le dispositif d'avancement (14) pour soutenir l'avancement, **caractérisé en ce qu'**un axe d'avancement (44) du dispositif d'avancement (14) et un axe longitudinal (62) de l'outil de forage ou de l'appareil à outil de forage sont disposés cependant parallèlement entre eux, mais à une distance (64) les uns des autres, de sorte que l'outil de forage ou l'appareil à outil de forage est disposé à l'extérieur de la partie du dispositif d'avancement (14) qui peut être alimenté en dépression.

2. Dispositif selon la revendication 1, **caractérisé en ce que** le dispositif d'avancement (14) ne présente pas des surfaces d'étanchéité mobiles pouvant être déplacées les unes vers les autres.

3. Dispositif selon la revendication 1 ou 2, **caractérisé en ce que** le dispositif d'avancement (14) présente un soufflet (50) entre un piston (40) mobile et pouvant être alimenté en dépression et un composant de base (34) pouvant être alimenté en dépression.

4. Dispositif selon l'une quelconque des revendications précédentes, **caractérisé en ce que** des moyens de guidage (42) actifs sont prévus à l'intérieur du soufflet (50) et du composant de base (34) entre le piston (40) et le composant de base (34).

5. Dispositif selon l'une quelconque des revendications précédentes, **caractérisé en ce que** le système d'aspiration (16) comprend un canal d'aspiration (80) étiré depuis une zone de placement d'outil (76) du dispositif vers le branchement (10) pour la source de dépression, qui est séparé d'une zone d'aspiration (26), ouverte vers la surface (8) plane, du système d'aspiration (16).

6. Dispositif selon l'une quelconque des revendications précédentes, **caractérisé par** un premier dispositif de commande (36) pour l'application de dépression sur le système d'aspiration (12).

7. Dispositif selon l'une quelconque des revendications précédentes, **caractérisé en ce que** le premier dispositif de commande (36) est en mesure de libérer ou de fermer une communication d'écoulement entre une zone d'aspiration (26) du système d'aspiration (12) et la source de dépression ou le branchement (10) pour la source de dépression.

8. Dispositif selon l'une quelconque des revendications précédentes, **caractérisé par** un second dispositif de commande (56) pour l'application de dépression sur le dispositif d'avancement (14).

9. Dispositif selon l'une quelconque des revendications précédentes, **caractérisé en ce que** le second dispositif de commande (56) est en mesure de libérer ou de fermer une communication d'écoulement entre le côté, pouvant être alimenté en dépression, du piston (40) du système d'avancement (14) et la source de dépression ou le branchement (10) pour la source de dépression.

10. Dispositif selon l'une quelconque des revendications précédentes, **caractérisé par** un troisième dispositif de commande pour l'application de dépression sur le système d'aspiration.

11. Dispositif selon l'une quelconque des revendications précédentes, **caractérisé en ce que** le troisième dispositif de commande comprend un dispositif d'interruption ou un dispositif d'étranglement, au moyen duquel le flux d'air d'aspiration allant de la zone de placement d'outil (76) du dispositif vers la source de dépression ou le branchement pour la source de dépression peut être interrompu ou étranglé.

12. Dispositif selon l'une quelconque des revendications précédentes, **caractérisé en ce que** le premier et le second dispositifs de commande (36, 56) coopèrent de telle sorte qu'un actionnement du second dispositif de commande (56) pour l'application de dépression sur le dispositif d'avancement (14) n'est possible que lorsque le premier dispositif de commande (36) est actionné.

13. Dispositif selon l'une quelconque des revendications précédentes, **caractérisé en ce que** le premier et le second dispositifs de commande (36, 56) coopèrent de telle sorte que, lorsque le second dispositif de commande (56) est actionné, une interruption de l'alimentation en dépression du dispositif d'aspiration (12) est fermée.

14. Dispositif selon l'une quelconque des revendications précédentes, **caractérisé en ce que** les dispositifs de commande (36, 56) comprennent des corps de vanne (86, 92) actionnés par coulisseau.

15. Dispositif selon l'une quelconque des revendications précédentes, **caractérisé en ce que** les dispositifs de commande (36, 56) comprennent des vannes de réglage de pression de préférence réglables progressivement, au moyen desquelles la force d'aspiration et la force d'avancement peuvent être réglées.

16. Dispositif selon l'une quelconque des revendications précédentes, **caractérisé en ce que** des dispositifs de commande (36, 56) présentent des moyens d'actionnement (20, 22) prévus de préférence dans une zone de préhension.

17. Dispositif selon l'une quelconque des revendications précédentes, **caractérisé en ce que** les moyens d'actionnement (20, 22) sont prétendus dans une position.

18. Dispositif selon l'une quelconque des revendications précédentes, **caractérisé en ce qu'**un premier moyen d'actionnement (20) et un second moyen d'actionnement (22) sont prévus dans une manette (18) du dispositif en se faisant sensiblement face.

19. Dispositif selon l'une quelconque des revendications précédentes, **caractérisé par** un dispositif d'enregistrement de profondeur, par lequel une inactivation du dispositif d'avancement (14) peut être déclenchée.

20. Dispositif selon l'une quelconque des revendications précédentes, **caractérisé en ce que** le dispositif d'enregistrement de profondeur comprend un bouton-poussoir.

21. Dispositif selon l'une quelconque des revendications précédentes, **caractérisé en ce que** le dispositif d'enregistrement de profondeur comprend une butée de profondeur réglable.

22. Dispositif selon l'une quelconque des revendications précédentes, **caractérisé en ce que** le branchement (10) pour la source de dépression comprend des moyens de blocage par encliquetage, crantage ou pouvant être engagés par l'arrière d'une autre manière, afin d'empêcher un décollement involontaire de la source de dépression.

23. Dispositif selon l'une quelconque des revendications précédentes, **caractérisé en ce que** le dispositif de montage (4) peut être détaché du dispositif (2).

24. Dispositif selon l'une quelconque des revendications précédentes, **caractérisé en ce que** le dispositif d'aspiration (16) présente un composant de grille dans la zone de placement d'outil.

25. Dispositif selon l'une quelconque des revendications précédentes, **caractérisé en ce que** le dispositif d'aspiration (12) présente une pluralité de chambres d'aspiration dans sa zone d'aspiration ouverte vers la surface plane (segmentation).

26. Dispositif selon l'une quelconque des revendications précédentes, **caractérisé en ce que** des vannes de limitation d'écoulement sont attribuées aux chambres d'aspiration.

27. Dispositif selon l'une quelconque des revendications précédentes, **caractérisé en ce que** le dispositif de montage (4) et le dispositif d'avancement (14) peuvent être inclinés vers un plan d'aspiration du système d'aspiration.

28. Dispositif selon l'une quelconque des revendications précédentes, **caractérisé par** une réserve de dépression pour une fonction d'urgence.

29. Dispositif selon l'une quelconque des revendications précédentes, **caractérisé par** un détecteur de proximité dans la zone d'aspiration (26) du système d'aspiration (12) pour le démarrage automatique de l'opération d'aspiration.

30. Dispositif selon l'une quelconque des revendications précédentes, **caractérisé en ce que** le dispositif d'aspiration (16) présente un revêtement (84) amovible et recouvrant l'endroit de placement d'outil.

31. Dispositif selon l'une quelconque des revendications précédentes, **caractérisé en ce que** le revêtement (84) peut être encliqueté, enclipsé ou emboîté de façon amovible.

32. Dispositif selon l'une quelconque des revendications précédentes, **caractérisé en ce que** le revêtement (84) ne recouvre que l'outil de ferrage.

33. Dispositif selon l'une quelconque des revendications précédentes, **caractérisé en ce qu'**un moyen d'étanchéité (24) dans la zone d'aspiration (26) du système d'aspiration (12) est amovible et remplaçable.

34. Dispositif selon l'une quelconque des revendications précédentes, **caractérisé par** un branchement articulé pour un flexible d'aspiration d'une source de dépression.
